# EUROPEAN PATENT SPECIFICATION

(11) **EP 4 325 631 B1**
(45) Date of publication and mention of the grant of the patent: **23.09.2026**
(21) Application number: 22190567.2
(22) Date of filing: 16.08.2022
(51) Int. Cl.: H01M 10/52, H01M 50/249, H01M 50/367, H01M 10/625, H01M 10/658, H01M 50/148, H01M 50/30, H01M 50/358, H01M 10/052

(54) **BATTERY SYSTEM AND VEHICLE INCLUDING THE BATTERY SYSTEM**
BATTERIESYSTEM UND FAHRZEUG MIT DEM BATTERIESYSTEM
SYSTÈME DE BATTERIE ET VÉHICULE COMPRENANT LE SYSTÈME DE BATTERIE

(43) Date of publication of application: 21.02.2024
(73) Proprietor: Samsung SDI Co., Ltd., Yongin-si, Gyeonggi-do 17084 (KR)
(72) Inventor: Pröll, Andreas Peter, 4184 Helfenberg (AT)
(74) Representative: Gulde & Partner

(56) References cited:
- US-A1- 2016 197 324
- US-A1- 2019 379 030

## Description

### Field of the Disclosure

The present disclosure relates to a battery system which more securely handles a thermal runaway of one or more of its battery cells. In particular, the battery system of the present disclosure allows for a reduced heat-up of an outer surface of the battery system and thus reduces the risk of injuries. Further, the present invention relates to a vehicle comprising such a battery system.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator or a hydrogen fuel power cell. Furthermore, the vehicle may include a combination of an electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as a power supply for small electronic devices, such as cellular phones, notebook computers and camcorders, while high-capacity rechargeable batteries are used as a power supply for electric and hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy content, in particular for motor driving of a hybrid vehicle. That is, the battery module is formed by interconnecting the electrode terminals of the plurality of unit battery cells depending on a required amount of power and in order to realize a high-power rechargeable battery.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. In automotive applications, battery systems often consist of a plurality of battery modules connected in series for providing a desired voltage. Therein, the battery modules may comprise submodules with a plurality of stacked battery cells, each stack comprising cells connected in parallel that are connected in series (*XpYs*) or multiple cells connected in series that are connected in parallel (*XsYp*).

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

To provide thermal control of the battery pack a thermal management system is required to safely use the at least one battery module by efficiently emitting, discharging and/or dissipating heat generated from its rechargeable batteries. If the heat emission/discharge/dissipation is not sufficiently performed, temperature deviations occur between respective battery cells, such that the at least one battery module cannot generate a desired amount of power. In addition, an increase of the internal temperature can lead to abnormal reactions occurring therein and thus charging and discharging performance of the rechargeable deteriorates and the life-span of the rechargeable battery is shortened. Thus, cell cooling for effectively emitting/discharging/dissipating heat from the cells is required.

Exothermic decomposition of cell components may lead to a so-called thermal runaway. In general, thermal runaway describes a process that is accelerated by increased temperature, in turn releasing energy that further increases temperature. Thermal runaway occurs in situations where an increase in temperature changes the conditions in a way that causes a further increase in temperature, often leading to a destructive result. In rechargeable battery systems, thermal runaway is associated with strongly exothermic reactions that are accelerated by temperature rise. These exothermic reactions include combustion of flammable gas compositions within the battery pack housing. For example, when a cell is heated above a critical temperature (typically above 150°C) it can transit into a thermal runaway. The initial heating may be caused by a local failure, such as a cell internal short circuit, heating from a defect electrical contact, short circuit to a neighboring cell. During the thermal runaway, a failed battery cell, i.e., a battery cell which has a local failure, may reach a temperature exceeding 700°C. Further, large quantities of hot gas are ejected from inside of the failed battery cell through the venting opening of the cell housing into the battery pack. The main components of the vented gas are H₂, CO₂, CO, electrolyte vapor and other hydrocarbons. The vented gas is therefore burnable and potentially toxic. The vented gas also causes a gas-pressure increase inside the battery pack.

A state-of-the-art venting concept of a battery is to let the hot venting gas stream of a battery cell in thermal runaway condition exit the battery cell(s) and expand into the battery housing and escape through a housing venting valve to the outside (the environment of the battery housing). The venting gas stream thereby heats up the battery housing, in particular parts of the battery housing opposite the venting exits of the battery cells, as e.g. a housing cover. This leads to very high temperatures on the outer surface of the battery pack. This poses a risk to bystanders, e.g. to personnel handling the battery system as they may get burned when coming in contact with the outer side of the battery housing. Also, this might result in igniting surrounding components.

Further, the venting gas stream may comprise hot and toxic venting gas as well as conductive solid matter (material) like graphite powder and metal fragments. Said electrically conductive material may deposit on electrically active parts as terminals and busbars on top of the cells causing short circuits and arcing. Thus, the thermal runaway of one battery cell could cause short circuits and thus a consecutive thermal runaway of other battery cells leading into a complete damage of the battery (the battery pack), the battery system and the vehicle.

US 2016/197324 A1 discloses a battery module with a housing and battery cells comprising venting exits, the battery cells covered with a shield plate which is supposed to block effluent from the battery cells from contacting a carrier and heating the electrical components of a subassembly, wherein a venting gas stream may leave the venting exits via a vent path thereby passing an opening in a shield plate before reaching an outlet vent.

It is thus an object of the present invention to overcome or reduce at least some of the drawbacks of the prior art and to provide an improved thermal runaway handling, in particular to provide a battery system which more securely handles a thermal runaway of one or more of its battery cells and is safer for bystanders and surrounding components.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a battery system is provided, comprising: a battery pack including a housing and at least one battery cell accommodated within the housing, wherein the at least one battery cell comprises a venting side with a venting exit; a housing cover of the housing sealing the battery pack and forming a venting channel, wherein the housing cover comprises a frontside with a guide projection projecting towards the venting exit into the venting channel for guiding a venting gas stream exhausted through the venting exit into the venting channel during a thermal runaway away from the venting exit, a reflection plate arranged at a backside of the housing cover opposite the frontside such that an air gap is formed between the reflection plate and the guide projection.

According to another aspect of the present disclosure, the guide projection is a gas splitting projection adapted to split the venting gas stream such that the venting gas stream is deflected to opposite sides of the venting channel. According to a respective aspect, the gas splitting projection has a tapered shape with a tip facing the venting exit of the at least one battery cell.

Yet another aspect of the present disclosure refers to the battery system further comprising a cell cover element arranged between the venting side of the at least one battery cell and the housing cover, wherein the cell cover element covers the at least one battery cell including its electrical connecting means and comprises at least one opening aligned with the venting exit of the at least one battery cell.

The housing cover and the cell cover element may be connected to one another in a force and/or form-locking manner.

Yet another aspect of the present disclosure refers to the reflection plate being clinched or brazed to the housing cover or connected to the housing cover via sealed rivets.

Also, the housing cover may be elastically clamped between the reflection plate and the cell cover element. The housing cover may serve as a clamping-spring for clamping the cell cover element to the venting side of the at least one battery cell.

Yet another aspect of the present disclosure refers to the housing cover comprising a higher heat resistance than the reflection plate.

Yet another aspect of the present disclosure refers to an electric vehicle comprising a battery system according to the invention.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a perspective view of a battery system according to first embodiment of the invention.
- Fig. 2: illustrates a perspective view of a battery system according to second embodiment of the invention.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, an upper housing cover is positioned at the upper part of the z-axis, whereas a lower housing cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

The electrical connections or interconnections described herein may be realized by wires or conducting elements, e.g. on a PCB or another kind of circuit carrier. The conducting elements may comprise metallization, e.g. surface metallizations and/or pins, and/or may comprise conductive polymers or ceramics. Further electrical energy might be transmitted via wireless connections, e.g. using electromagnetic radiation and/or light.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery system is provided comprising a battery pack including a housing and at least one battery cell accommodated within the housing. Preferably, the battery system comprises multiple battery cells accommodated within the housing. The battery cells may be interconnected via busbars contacting the respective electrode terminals of the battery cells to form one or more battery modules. The battery cells may e.g. be prismatic or cylindrical cells. The battery cells comprise venting exits at a venting side of the battery cells, which is preferably the terminal side of the battery cells, the venting exits allowing a venting gas stream to escape the battery cells during a thermal runaway. Venting valves may be provided at the venting exits.

The battery system further comprises a housing cover sealing the battery pack to the outside. The housing cover is part of the housing. The housing cover may be a cover plate, for example an upper cover plate arranged at an upper side/top side of the battery system or a lower cover plate arranged at a lower side/bottom side of the battery system. The housing cover may be attached to a base of the housing after the battery cells have been inserted into the housing base. The housing cover seals, i.e. closes, the housing to the outside, i.e. the environment of the battery system. The housing cover, in combination with the further parts of the housing, i.e. the housing base, may seal the inside of the battery housing towards the outside of the battery housing such that a venting gas stream exhausted by one or more battery cells during a thermal runaway may escape the battery housing and thus the battery system only at passages provided for this purpose, e.g. at a venting valve arranged in a housing wall of the housing. The housing cover may in particular seal the battery pack to the outside in an airtight manner.

The housing cover forms a venting (gas) channel, i.e. a channel for receiving the venting gas stream exiting the at least one battery cell during a thermal runaway and for leading away this venting gas stream from the battery cell towards the outside, e.g. via said venting valve arranged in a housing wall. The housing cover may form the venting channel in combination with the venting side of the battery cell(s) or, preferably, with a cell cover element arranged at the venting side of the battery cell(s) as explained in more detail below.

The housing cover comprises a frontside facing the venting exit of the battery cell and a backside opposite the frontside, i.e. facing away from the venting exit. At the frontside of the housing cover a guide projection, i.e. a projecting element for guiding the venting gas stream, is arranged. The guide projection is preferably an integrated guide projection, i.e. it is an integral part of the housing cover. In other words, the housing cover may form the guide projection at its frontside. In other words, the guide projection is a protrusion in the housing cover. The guide projection projects towards the venting exit of the at least one battery cell and thus projects into the venting channel. The guide projection is adapted to guide the venting gas stream exhausted through the venting exit of the battery cell during a thermal runaway event away from the venting exit. The guide projection is adapted to split the venting gas stream in two substreams and direct these substreams in opposite directions away from one another as will be explained in more detail below. The guide projection thus leads the venting gas stream away from the venting exit and from the battery cell along the venting channel. This allows for the venting gas stream to be transported away quickly and reliably. Also, the venting gas stream is cooled down via heat transfer to surrounding elements, i.e. to the walls of the venting channel as e.g. the housing cover and the venting side of the battery cells or, preferably, the cell cover element. The guide projection may also reduce the pressure drop occurring during exhaust of the venting gas stream by an aerodynamically efficient design and may serve as a collector for molten particles which are carried with the venting gas stream.

Further, the battery system according to the invention comprises a reflection plate arranged at the backside of the housing cover. The reflection plate, or the combination of the reflection plate and the housing cover, is adapted such that an air gap is formed between the reflection plate and the guide projection of the housing cover. In other words, there is a free space confined between the reflection plate and the housing cover, the free space being filled with air. This free space is formed between the housing cover and the reflection plate at the position of the guide projection, i.e. at the backside of the guide projection. As mentioned, the guide projection is formed as a protrusion in the frontside of the housing cover. Thus, a corresponding dent or depression may be formed at the backside of the housing cover. The reflection plate may cover this dent or depression thereby forming the air gap in between the reflection plate and the housing cover. The reflection plate preferably forms part of the housing of the battery system. In particular, as the reflection plate is arranged at the backside and thus the outer side of the housing cover, the reflection plate may be accessible from the outside. The reflection plate is adapted to reflect heat radiation, in particular infrared radiation.

During a thermal runaway the housing cover and in particular its guide projection heats up extensively due to receiving heat energy from the venting gas stream. This heat traverses the housing cover to the outer side of the housing cover via heat conduction. From there, the heat may be conducted via the surrounding air and via heat radiation. The reflection plate arranged at the outer side of the housing cover at least at the position of the guide projection, however, reflects the heat radiation, in particular infrared radiation, emitted by the heated-up housing cover (in particular by the guide projection) thus reducing energy absorption by the reflection plate. Further, the air gap arranged between the housing cover and the reflection plate serves as a thermal insulator to the reflection plate. As a result, the heat transfer from the housing cover to the reflection plate is further reduced. It is thus prevented that the reflection plate, and thus the outer side of the battery system, heats up to dangerous temperatures. The invention thus achieves significantly lower heat up of the outer surface of the housing/battery system than conventional cover plates. This reduces the risk of injuries to bystanders as they may come into contact with the outer side of the battery system without risking burns. Also, ignition of surrounding components in a vehicle comprising the battery system are prevented.

According to the invention, the guide projection is a gas splitting projection adapted to split the venting gas stream such that the venting gas stream is deflected to opposite sides of the venting channel. According to the invention, the gas splitting projection has a tapered shape with a tip facing the venting exit of the at least one battery cell. The gas splitting projection may split the venting gas stream in two substreams flowing along opposite directions, in particular perpendicular to a longitudinal extension of the venting channel. The tip of the gas splitting projection may be arranged directly opposite the venting exit centrally to the venting exit so that the venting gas stream exhausted through the venting exit centrally hits the tip and is split in two equal substreams as mentioned. The gas splitting projection thus allows for an even distribution of the venting gas stream in particular along a width of the venting channel, i.e. in directions perpendicular to a longitudinal extension of the venting channel. The venting gas stream is transported away quickly and reliably. Also, the venting gas stream is cooled down via heat transfer to surrounding element, i.e. to the walls of the venting channel as e.g. the housing cover and the venting side of the battery cells or, preferably, the cell cover element. Thus, this embodiment allows for a more effective distribution of the venting gases within the venting channel and thus for a more effective cooling.

According to an embodiment, the battery system further comprises a cell cover element arranged between the venting side of the at least one battery cell and the housing cover. The cell cover element covers the at least one battery cell including its electrical connecting means, as e.g. the cell terminals and the busbars connecting the battery cell to further battery cells of the battery system. The cell cover element further comprises an (at least one) opening aligned with the venting exit of the at least one battery cell so that the venting gas stream exiting the venting exit may pass through the cell cover element. The cell cover element covers the at least one battery cell including its electrical connecting means such that the venting gas stream does not come into contact with the venting side of the cell cover element, in particular not with the electrical connecting means. Thus, the cell cover element shields the electrical connecting means from the venting gas stream, in particular from any conductive material present in the venting gas stream which might otherwise cause a short circuit if deposited onto the electrical connecting means. Such conductive material may rather be deposited onto the cell cover element or the gas splitting projection or, preferably, be transported away with the venting gas stream along the venting channel. The venting channel may be formed between the cell cover element and the housing cover. The cell cover element thus protects the electrical elements of the battery cell from the venting gas stream preventing short-circuits.

According to an embodiment, the housing cover and the cell cover element are connected to one another in a force and/or form-locking manner.

According to an embodiment, the housing cover is elastically clamped between the reflection plate and the cell cover element. In that regard, the housing cover may serve as a clamping-spring for clamping the cell cover element to the venting side of the at least one battery cell. The housing cover may comprise spring elements for realizing the clamping. The spring elements may be integral to the housing cover. The spring elements may form leaf springs. In other words, the housing cover may have a curved shape, wherein the spring elements are formed by the curves in the housing cover and work like a leaf spring. Thus, this arrangement holds down the cell cover element by elastic deformation. This allows for a simple manufacture and for easier disassembly, for example for rework or recycling.

According to an embodiment, the reflection plate may be clinched or brazed to the housing cover or connected to the housing cover via sealed rivets. The housing cover and the reflection plate may thus be joined in a way that is insensible to temperature and/or provides high thermal resistance.

According to an embodiment, the housing cover comprises a higher heat resistance than the reflection plate. The housing cover may comprise a higher heat resistance than the reflection plate due to a different choice of materials meaning that the housing cover may be made of a material of a higher heat resistance than the material the reflection plate is made of. The housing cover may be made of e.g. steel. The reflection plate may be made of a material with a low emissivity meaning that it reflects most of the heat/infrared radiation. For example, the reflection plate may be made of aluminum. Aluminum is advantageous since it has a low emissivity. Alternatively, the reflection plate may be made of ceramics having a low emissivity. Also, the reflection plate may comprise a coating to achieve such low emissivity. This allows for the housing cover to endure the high temperatures of the venting gas stream.

The invention also pertains to an electric vehicle comprising a battery system according to the invention.

### Specific Embodiments

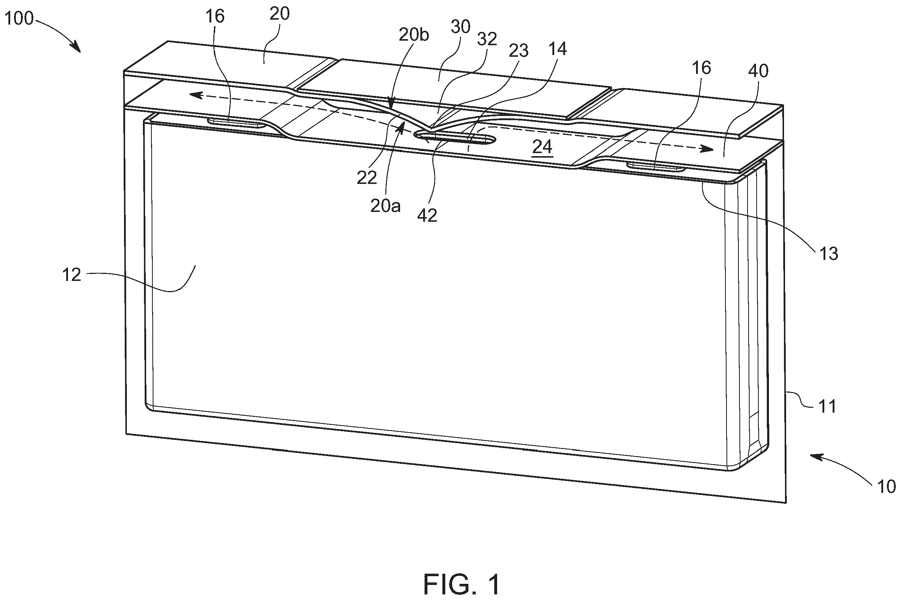

Fig. 1 is a perspective view illustrating a battery system 100 according to a first embodiment of the invention. The battery system 100 comprises a battery pack 10 including a housing 11 and multiple battery cells 12 accommodated within the housing 11, wherein the figure shows only one of the battery cells. The battery cell 12 comprises a venting exit 14 at a venting side 13 of the battery cell 12 for letting a venting gas stream exit the battery cell 12 during a thermal runaway occurring inside the battery cell 12.

A housing cover 20 of the housing 11 seals the battery pack 10 to the outside and forms, together with a cell cover element 40, a venting channel 24. The housing cover 20 comprises a frontside 20a with an integrated guide projection 22 projecting towards the venting exit 14 of the battery cell 12 into the venting channel 24. The guide projection 22 is a gas splitting projection with a tapered shape with a tip 23 facing the venting exit 14. The housing cover 20 may be made of steel.

The cell cover element 40 is arranged between the venting side 13 of the battery cell 12 and the housing cover 20, and covers the battery cell 12 including its electrical connecting means 16, which may e.g. be electrode terminals of the cell and busbars interconnecting this battery cell with another battery cell of the battery pack. The cell cover element 40 comprises an opening 42 aligned with the venting exit 14 of the battery cell 12 so as to let venting gases pass through the cell cover element 40.

A reflection plate 30 is arranged at a backside 20b of the housing cover 20 opposite the frontside 20a such that an air gap 32 is formed between the reflection plate 30 and the guide projection 22 of the housing cover 20. The reflection plate 30 may be clinched or brazed to the housing cover 20 or connected to the housing cover 20 via sealed rivets. The reflection plate 30 may be made of aluminum.

During a thermal runaway event occurring in the battery cell 12 a venting gas stream is exhausted via the venting exit 14, passes through the opening 42 of the cell cover element 40 and hits the guide projection 22. The venting gas stream is split by the guide projection 22 into two substreams of substantially equal volume, the two substreams deflected to opposite sides of the venting channel 24 as indicated in Figure 1 via dotted arrows. Material present in the venting gas stream may thereby deposit onto the guide projection 22.

The housing cover 20 and in particular its guide projection 22 are thus subjected to the very high temperatures of the venting gas stream. The housing cover 20 is thus preferably of a highly temperature resistant material, e.g. steel. The reflection plate 30 is arranged at the outer side of the housing cover 20 facing the backside of the guide projection 22 reflects heat radiation, in particular infrared radiation, emitted by the heated-up housing cover 20 (in particular by the guide projection 22) thus reducing energy absorption by the reflection plate 30.

Further, the air gap 32 arranged between the housing cover 20 and the reflection plate 30 serves as a thermal insulator to the reflection plate 30. As a result, the heat transfer from the housing cover 20 to the reflection plate 30 is further reduced.

It is thus prevented that the reflection plate 30 as well as the outer side of the battery system 100 are heated up to dangerous temperatures. The invention thus achieves significantly lower heat up of the outer surface of the battery system 100 than conventional cover plates. This reduces the risk of injuries to bystanders as they may come into contact with the outer side of the battery system 100 without risking burns. Also, ignition of surrounding components in a vehicle comprising the battery system 100 are prevented.

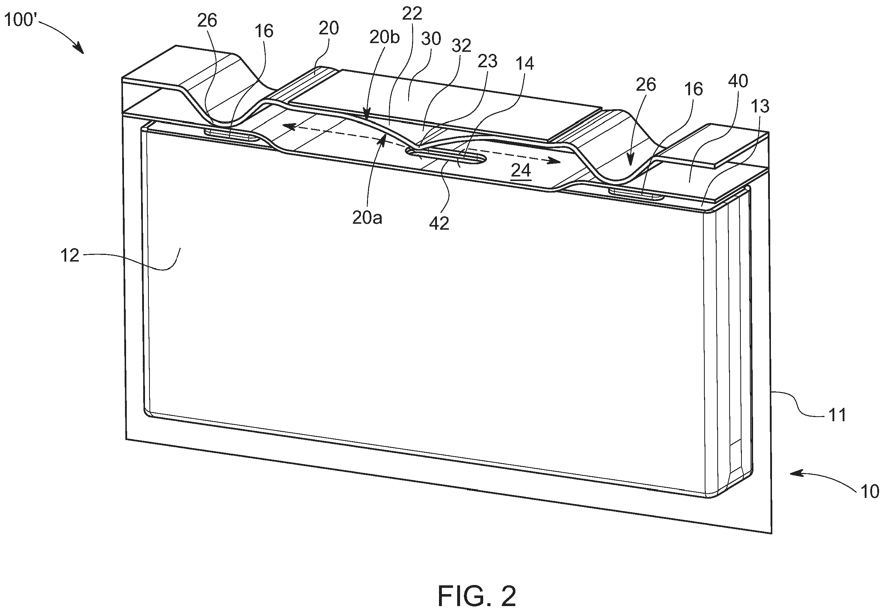

Fig. 2 is a perspective view illustrating a battery system 100' according to a second embodiment of the invention.

The battery system 100' differs from the battery system 100 of Figure 1 only in that the housing cover 20 comprises integral spring elements 26. In this embodiment, the housing cover 20 is pressed by the reflection plate 30 against the cell cover element 40, the housing cover 20 thus serving as a clamping-spring for clamping the cell cover element 40 to the venting side 13 of the battery cell 12.

This allows for a simple construction without the need of connecting means between the housing cover 20 and the cell cover element 40.

### Reference signs

- 10: battery pack
- 11: housing
- 12: battery cell
- 13: venting side
- 14: venting exit
- 16: electrical connecting means
- 20: housing cover
- 20a: frontside
- 20b: backside
- 22: guide projection
- 23: tip
- 24: venting channel
- 26: spring element
- 30: reflection plate
- 32: air gap
- 40: cell cover element
- 42: opening
- 100: battery system
- 100': battery system

## Claims

1. A battery system (100, 100'), comprising:
a battery pack (10) including a housing (11) and at least one battery cell (12) accommodated within the housing (11), wherein the at least one battery cell (12) comprises a venting side (13) with a venting exit (14);
a housing cover (20) of the housing (11) sealing the battery pack and forming a venting channel (24) at the venting side (13) for receiving a venting gas stream exiting the venting exit (14), wherein the housing cover (20) comprises a frontside (20a) facing the venting exit (14) with a guide projection (22) formed as a protrusion in the frontside (20a) of the housing cover (20) and projecting towards the venting exit (14) into the venting channel (24) for guiding the venting gas stream exhausted through the venting exit (14) into the venting channel (24) during a thermal runaway away from the venting exit (14),
a reflection plate (30) arranged at a backside (20b) of the housing cover (20) opposite the frontside (20a), the reflection plate (30) covering a backside of the guide projection (22) such that an air gap (32) is formed as a free space confined between the reflection plate (30) and the housing cover (20) where the guide projection (22) is arranged, wherein the reflection plate (30) is adapted to reflect heat radiation.

2. The battery system (100, 100') according to claim 1, wherein the guide projection (22) is a gas splitting projection adapted to split the venting gas stream such that the venting gas stream is deflected to opposite sides of the venting channel (24).

3. The battery system (100, 100') according to claim 2, wherein the gas splitting projection has a tapered shape with a tip facing the venting exit (14).

4. The battery system (100, 100') according to any one of the preceding claims, further comprising a cell cover element (40) arranged between the venting side (13) and the housing cover (20), wherein the cell cover element (40) covers the at least one battery cell (12) including its electrical connecting means (16) and comprises an opening (42) aligned with the venting exit (14).

5. The battery system (100, 100') according to claim 4, wherein the housing cover (20) and the cell cover element (40) are connected to one another in a force and/or form-locking manner or wherein the housing cover (20) is elastically clamped between the reflection plate (30) and the cell cover element (40).

6. The battery system (100, 100') according to claim 4, wherein the housing cover (20) serves as a clamping-spring for clamping the cell cover element (40) to the venting side (13).

7. The battery system (100, 100') according to any one of the preceding claims, wherein the reflection plate (30) is clinched or brazed to the housing cover (20) or connected to the housing cover (20) via sealed rivets.

8. The battery system (100, 100') according to any one of the preceding claims, wherein the housing cover (20) comprises a higher heat resistance than the reflection plate (30).

9. An electric vehicle comprising the battery system (100, 100') according to any one of the preceding claims.

## Patentansprüche

1. Batteriesystem (100, 100'), umfassend:
einen Batteriepack (10) einschließlich eines Gehäuses (11) und mindestens einer Batteriezelle (12), die innerhalb des Gehäuses (11) untergebracht ist, wobei die mindestens eine Batteriezelle (12) eine Entlüftungsseite (13) mit einem Entlüftungsausgang (14) umfasst;
eine Gehäuseabdeckung (20) des Gehäuses (11), die den Batteriepack abdichtet und einen Entlüftungskanal (24) an der Entlüftungsseite (13) ausbildet, um einen Entlüftungsgasstrom aufzunehmen, der aus dem Entlüftungsausgang (14) austritt, wobei die Gehäuseabdeckung (20) eine Vorderseite (20a) umfasst, die dem Entlüftungsausgang (14) zugewandt ist, wobei ein Führungsvorsprung (22) als Erhebung in der Vorderseite (20a) der Gehäuseabdeckung (20) ausgebildet ist und in Richtung des Entlüftungsausgangs (14) in den Entlüftungskanal (24) hervorspringt, um den Entlüftungsgasstrom, der durch den Entlüftungsausgang (14) in den Entlüftungskanal (24) abgeführt wird, während eines thermischen Durchgehens von dem Entlüftungsausgang (14) weg zu führen,
eine Reflexionsplatte (30), die an einer Rückseite (20b) der Gehäuseabdeckung (20) gegenüber der Vorderseite (20a) angeordnet ist, wobei die Reflexionsplatte (30) eine Rückseite des Führungsvorsprungs (22) derart abdeckt, dass ein Luftspalt (32) als zwischen der Reflexionsplatte (30) und der Gehäuseabdeckung (20) eingegrenzter Freiraum ausgebildet ist, in dem der Führungsvorsprung (22) angeordnet ist, wobei die Reflexionsplatte (30) dazu ausgelegt ist, Wärmestrahlung zu reflektieren.

2. Batteriesystem (100, 100') nach Anspruch 1, wobei der Führungsvorsprung (22) ein gasaufteilender Vorsprung ist, der dazu ausgelegt ist, den Entlüftungsgasstrom derart aufzuteilen, dass der Entlüftungsgasstrom zu gegenüberliegenden Seiten des Entlüftungskanals (24) abgelenkt wird.

3. Batteriesystem (100, 100') nach Anspruch 2, wobei der gasaufteilende Vorsprung eine konische Form aufweist, wobei eine Spitze dem Entlüftungsausgang (14) zugewandt ist.

4. Batteriesystem (100, 100') nach einem der vorhergehenden Ansprüche, ferner umfassend ein Zellenabdeckungselement (40), das zwischen der Entlüftungsseite (13) und der Gehäuseabdeckung (20) angeordnet ist, wobei das Zellenabdeckungselement (40) die mindestens eine Batteriezelle (12) einschließlich ihrer elektrischen Verbindungsmittel (16) abdeckt und eine mit dem Entlüftungsausgang (14) fluchtende Öffnung (42) umfasst.

5. Batteriesystem (100, 100') nach Anspruch 4, wobei die Gehäuseabdeckung (20) und das Zellenabdeckungselement (40) kraft- und/oder formschlüssig miteinander verbunden sind oder wobei die Gehäuseabdeckung (20) zwischen der Reflexionsplatte (30) und dem Zellenabdeckungselement (40) elastisch festgeklemmt ist.

6. Batteriesystem (100, 100') nach Anspruch 4, wobei die Gehäuseabdeckung (20) als Klemmfeder zum Festklemmen des Zellenabdeckungselements (40) an der Entlüftungsseite (13) dient.

7. Batteriesystem (100, 100') nach einem der vorhergehenden Ansprüche, wobei die Reflexionsplatte (30) mit der Gehäuseabdeckung (20) durchsetzgefügt oder verlötet ist oder mit der Gehäuseabdeckung (20) über abgedichtete Niete verbunden ist.

8. Batteriesystem (100, 100') nach einem der vorhergehenden Ansprüche, wobei die Gehäuseabdeckung (20) eine höhere Wärmebeständigkeit als die Reflexionsplatte (30) umfasst.

9. Elektrofahrzeug, umfassend das Batteriesystem (100, 100') nach einem der vorhergehenden Ansprüche.

## Revendications

1. Système de batterie (100, 100'), comportant :
un bloc-batterie (10) incluant un boîtier (11) et au moins une cellule de batterie (12) logée à l'intérieur du boîtier (11), dans lequel l'au moins une cellule de batterie (12) comporte un côté d'évent (13) avec une sortie d'évent (14) ;
un couvercle de boîtier (20) du boîtier (11) étanchéifiant le bloc-batterie et formant un canal d'évent (24) sur le côté d'évent (13) pour recevoir un flux de gaz d'évent sortant de la sortie d'évent (14), dans lequel le couvercle de boîtier (20) comporte une face avant (20a) face à la sortie d'évent (14) avec une saillie de guidage (22) formée comme une saillie dans la face avant (20a) du couvercle de boîtier (20) et faisant saillie vers la sortie d'évent (14) dans le canal d'évent (24) pour guider le flux de gaz d'évent évacué à travers la sortie d'évent (14) dans le canal d'évent (24) pendant un emballement thermique à l'écart de la sortie d'évent (14),
une plaque de réflexion (30) agencée au niveau d'une face arrière (20b) du couvercle de boîtier (20) opposée à la face avant (20a), la plaque de réflexion (30) recouvrant une face arrière de la saillie de guidage (22) de sorte qu'un espace d'air (32) soit formé comme un espace libre confiné entre la plaque de réflexion (30) et le couvercle de boîtier (20) où la saillie de guidage (22) est agencée, dans lequel la plaque de réflexion (30) est adaptée pour refléter le rayonnement thermique.

2. Système de batterie (100, 100') selon la revendication 1, dans lequel la saillie de guidage (22) est une saillie de division de gaz adaptée pour diviser le flux de gaz d'évent de sorte que le flux de gaz d'évent soit dévié vers des côtés opposés du canal d'évent (24).

3. Système de batterie (100, 100') selon la revendication 2, dans lequel la projection de séparation de gaz présente une forme effilée avec une pointe orientée vers la sortie d'évent (14).

4. Système de batterie (100, 100') selon l'une quelconque des revendications précédentes, comportant en outre un élément de couvercle de cellule (40) agencé entre le côté d'évent (13) et le couvercle de logement (20), dans lequel l'élément de couvercle de cellule (40) recouvre l'au moins une cellule de batterie (12) incluant ses moyens de connexion électrique (16) et comporte une ouverture (42) alignée avec la sortie d'évent (14).

5. Système de batterie (100, 100') selon la revendication 4, dans lequel le couvercle de boîtier (20) et l'élément de couvercle de cellule (40) sont reliés l'un à l'autre d'une manière solidaire en force et/ou en verrouillage de forme ou dans lequel le couvercle de boîtier (20) est serré élastiquement entre la plaque de réflexion (30) et l'élément de couvercle de cellule (40).

6. Système de batterie (100, 100') selon la revendication 4, dans lequel le couvercle de boîtier (20) sert de ressort de serrage pour serrer l'élément de couvercle de cellule (40) au côté d'évent (13).

7. Système de batterie (100, 100') selon l'une quelconque des revendications précédentes, dans lequel la plaque de réflexion (30) est rivée ou brasée au couvercle de boîtier (20) ou reliée au couvercle de boîtier (20) par des rivets étanches.

8. Système de batterie (100, 100') selon l'une quelconque des revendications précédentes, dans lequel le couvercle de boîtier (20) comporte une résistance thermique plus élevée que la plaque de réflexion (30).

9. Véhicule électrique comportant le système de batterie (100, 100') selon l'une quelconque des revendications précédentes.
